(19) Europäisches Patentamt
European Patent Office
Office européen des brevets

(11) **EP 2 386 612 B1**

(12) **EUROPEAN PATENT SPECIFICATION**

(45) Date of publication and mention of the grant of the patent:
**07.05.2014 Bulletin 2014/19**

(51) Int Cl.:
***C09D 11/00*** *(2014.01)*

(21) Application number: **11158695.4**

(22) Date of filing: **17.03.2011**

(54) **Aqueous inkjet ink**

Wässrige Tintenstrahltinte

Encre aqueuse pour jet d'encre

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.04.2010 US 326321 P**

(43) Date of publication of application:
**16.11.2011 Bulletin 2011/46**

(73) Proprietors:
• **Kabushiki Kaisha Toshiba**
**Minato-ku**
**Tokyo 105-8001 (JP)**
• **Toshiba TEC Kabushiki Kaisha**
**Tokyo 141-0032 (JP)**

(72) Inventors:
• **Hara, Takafumi**
**Shinagawa-ku Tokyo 141-0032 (JP)**
• **Akiyama, Ryozo**
**Shinagawa-ku Tokyo 141-0032 (JP)**
• **Yoshida, Maiko**
**Shinagawa-ku Tokyo 141-0032 (JP)**
• **Tonohiro, Chie**
**Shinagawa-ku Tokyo 141-0032 (JP)**
• **Kubota, Atsushi**
**Shinagawa-ku Tokyo 141-0032 (JP)**

(74) Representative: **Gendron, Vincent Christian et al**
**Fédit-Loriot**
**38, avenue Hoche**
**75008 Paris (FR)**

(56) References cited:
**WO-A2-2009/018261      JP-A- 2008 260 926**
**US-B1- 6 193 792**

**Description**

FIELD

Embodiments described herein relate generally to an aqueous inkjet ink.

BACKGROUND

In an aqueous inkjet ink in which a pigment is dispersed in a medium containing water, a moisture retaining agent for suppressing evaporation of water is generally contained. A viscosity adjusting agent for suppressing an increase in viscosity due to evaporation of water is also generally contained in an aqueous inkjet ink.

As the moisture retaining agent, a polyhydric alcohol or the like is used, and as the viscosity adjusting agent, a water-soluble organic solvent is used. The polyhydric alcohol is well compatible with cellulose which is a main component of a paper medium, and the water-soluble organic solvent has high penetrability into paper. Due to this, the aqueous inkjet ink easily penetrates into the inside of a paper medium, and the pigment in the ink is difficult to remain on the surface of the paper medium. In order to obtain an aqueous inkjet ink capable of forming an image having a desired density on a paper medium, it was necessary to incorporate a pigment in an amount determined by considering the penetration into the paper medium.

In order to reduce the production cost of the ink, it is required to reduce the content of the pigment. However, an aqueous inkjet ink in which the content of a pigment is low and which is capable of forming an image having a sufficient density on a paper medium is not obtained yet.

BRIEF DESCRIPTION OF THE DRAWINGS

FIG. 1 is a schematic view showing an exemplary inkjet recording apparatus.
FIG. 2 is a cross-sectional view showing an exemplary inkjet print head.

DETAILED DESCRIPTION

In general, according to one embodiment, an aqueous inkjet ink includes water and a pigment. The pigment is contained in the aqueous inkjet ink in an amount of less than 5 wt%. The aqueous inkjet ink has viscosities (mPa·s) measured at 25°C using a cone-plate type viscometer and satisfying the following relationships:

$$V_B/V_A \geq 1.5$$

$$3 \text{ mPa·s} \leq V_A \leq 15 \text{ mPa·s}$$

wherein $V_A$ represents a viscosity measured at a rotation speed of 50 rpm and $V_B$ represents a viscosity measured at a rotation speed of 2.5 rpm.

Hereinafter, embodiments will be specifically described.

If the penetration of a pigment into the inside of a paper medium can be suppressed when an aqueous inkjet ink is ejected onto the paper medium, an image density on the paper medium can be increased. The penetration of the ink into the inside of the paper medium is associated with the viscosity of the ink and when the viscosity of the aqueous inkjet ink is increased, the penetration of the ink into the paper medium is suppressed. Consequently, the pigment in the aqueous inkjet ink remains near the surface of the paper medium, and the density of the image obtained can be increased.

As a result of intensive studies made by focusing on this point, the present inventors found the following relationship with respect to the viscosity of the aqueous inkjet ink. The viscosity is a value measured at 25°C using a cone-plate type viscometer.

$$V_B/V_A \geq 1.5 \qquad \text{Formula 1}$$

In the formula 1, $V_A$ represents a viscosity measured at a rotation speed of 50 rpm and corresponds to a viscosity under control by high shearing stress. For example, the viscosity of the aqueous inkjet ink in the inside of the driven inkjet print head corresponds to $V_A$. The viscosity of the aqueous inkjet ink during the time from when the ink is ejected from the inkjet print head to when the ink comes into contact with the paper medium also corresponds to $V_A$. Since the ink is for use in inkjet recording, $V_A$ is defined within the range of 3 to 15 mPa·s.

In the formula 1, $V_B$ represents a viscosity measured at a rotation speed of 2.5 rpm and corresponds to a viscosity under control by low shearing stress. For example, the viscosity of the aqueous inkjet ink immediately after the ink comes into contact with the paper medium corresponds to $V_B$. When $V_B$ is increased, the penetration of the aqueous inkjet ink into the inside of the paper medium is suppressed. Therefore, $V_B$ is preferably 20 mPa·s or more.

In the inside of the driven inkjet print head, the aqueous inkjet ink according to this embodiment is subjected to high shearing stress. Therefore, in the inside of the inkjet print head, the viscosity of the aqueous inkjet ink according to this embodiment corresponds to $V_A$. When the ink is ejected from the inkjet print head and comes into contact with the paper medium, immediately thereafter, the viscosity of the ink is increased to $V_B$ and the penetrability thereof is decreased. Even before the ink comes into contact with the paper medium, when the shearing stress is low, the viscosity of the aqueous inkjet ink according to this embodiment is increased.

The viscosity of the aqueous inkjet ink which satisfies the above formula 1 is configured such that when the ink comes into contact with the paper medium, the viscosity thereof is increased to a value which is 1.5 times or more of the viscosity before the ink comes into contact with the paper medium. If $V_B/V_A$ is less than 1.5, the penetration thereof into the paper medium cannot be suppressed. In order to obtain an ink the penetration of which into the paper medium is more sufficiently suppressed, $V_B/V_A$ is preferably 1.7 or more. As described later, the value of $V_B$ depends on the content of a water-soluble polymeric compound and the upper limit thereof is about 50 mPa·s. The upper limit of $V_B/V_A$ is calculated to be about 17.

In the inside of an ink supply path of an inkjet recording apparatus, when the viscosity of the aqueous inkjet ink according to this embodiment is increased, it becomes difficult to stably eject the ink from the inkjet print head. Therefore, when an image is formed using the aqueous inkjet ink according to this embodiment, it is preferred to use an inkjet print head having an ink circulation path.

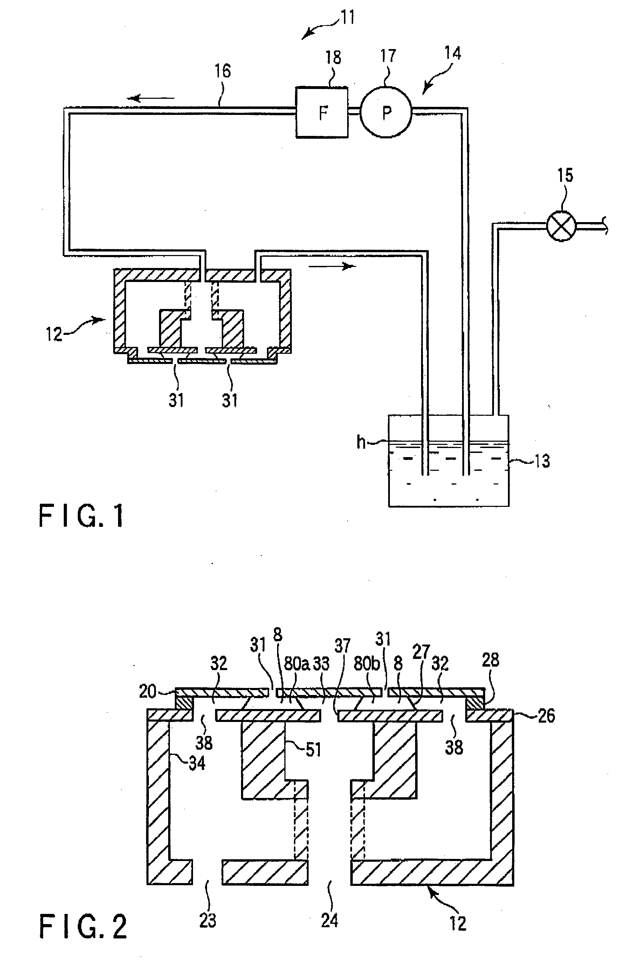

FIG. 1 shows an example of such an inkjet recording apparatus.

An inkjet recording apparatus 11 is provided with an inkjet print head 12 which ejects ink droplets onto a paper medium, a tank 13 which supplies the ink to the inkjet print head 12, and a circulation mechanism 14 which circulates the ink between the inkjet print head 12 and the tank 13. The inkjet print head 12 is provided with nozzles 31 for ejecting ink droplets onto a paper medium. In the inside of the tank 13, the aqueous inkjet ink according to this embodiment is stored.

The tank 13 has an air release valve 15, and the internal pressure of the tank 13 can be made the atmospheric pressure by opening the air release valve 15. Further, the internal pressure of the tank 13 can be changed from the atmospheric pressure by closing the air release valve 15.

The level of the liquid surface (meniscus) in each nozzle 31 of the inkjet print head 12 is made higher in the gravity direction than the height h of the liquid surface in the ink tank 13. According to this configuration, a negative pressure is generated in the head 12, and therefore, the ink does not leak from the nozzle.

The circulation mechanism 14 has an annular flow channel 16, and at a given point of the flow channel 16, a pump 17 and a filter member 18 are provided. The pump 17 provided on the upstream side circulates the inkjet ink in the flow channel 16 in the direction shown by the arrow. The filter member 18 provided on the downstream of the pump 17 collects foreign contaminants in the ink.

As shown in FIG. 2, in the inkjet print head 12, actuators 27 made of a piezoelectric material are provided on a substrate 26 having a second ink supply hole 37 and second ink discharge holes 38. The actuators 27 are arranged in the direction orthogonal to the paper plane, and a space between the adjacent actuators 27 serves as a pressure chamber 8. Therefore, a plurality of pressure chambers 8 are arranged in the direction orthogonal to the section view illustrated in FIG. 2. There are two pressure chamber lines: a first pressure chamber line 80a and a second pressure chamber line 80b.

On the substrate 26, a nozzle plate 20 is placed through a frame member 28, and the nozzle plate 20 has a plurality of nozzles 31 for ejecting the ink. Each of the nozzles 31 is formed such that its opening on the side of a pressure chamber 8 is larger than the opening on the ink ejection side. The plurality of nozzles 31 are provided corresponding to each of the pressure chambers 8 and constitute a nozzle line. There are two nozzle lines: a first nozzle line corresponding to the first pressure chamber line 80a and a second nozzle line corresponding to the second pressure chamber line 80b.

In each nozzle line, nozzles 31 are arranged at 300 nozzles per inch. The distance between the adjacent nozzles in the longitudinal direction of the nozzle line is 84.7 μm. The placement positions of the two nozzle lines are shifted by 42.3 μm in the longitudinal direction of the nozzle lines. Accordingly, this inkjet head 12 can perform printing at 600 dpi (dots per inch).

The second ink supply hole 37 of the substrate 26 is communicated with a supply-side common pressure chamber 33 between the nozzle plate 20 and the substrate 26. The supply-side common pressure chamber 33 is disposed between the first pressure chamber line 80a and the second pressure chamber line 80b. Spaces between the respective pressure chamber lines and the frame member serve as discharge-side common pressure chambers 32. Each of the discharge-side common pressure chambers 32 is communicated with the second ink discharge hole 38 of the substrate 26.

The ink is supplied from the first ink supply hole 24 and flows in an ink supply groove 51, the second ink supply hole 37, the supply-side common pressure chamber 33, the pressure chamber 8, the discharge-side common pressure chamber 32, the second ink discharge hole 38, an ink discharge groove 34, and an ink discharge hole 23 in this order. This path constitutes the ink circulation path.

By driving the actuators on both sides of each pressure chamber, the volume of the pressure chamber is changed. When the volume of the pressure chamber is expanded, the ink is supplied to the pressure chamber. When the pressure chamber is contracted, the ink is ejected from the nozzle. The ink which is not ejected passes through the ink circulation path and is supplied from the first ink supply hole 24 again.

Since the inside of the ink circulation path is under control by high shearing stress, the viscosity of the aqueous inkjet ink according to this embodiment therein corresponds to $V_A$. The ink has a viscosity within a range suitable for inkjet recording, and therefore, the ink can be stably ejected from the head.

When the aqueous inkjet ink according to this embodiment is ejected onto the paper medium, immediately thereafter, the shearing stress is decreased, and therefore, the viscosity of the ink is increased to $V_B$. The penetrability of the aqueous inkjet ink having an increased viscosity into the paper medium is decreased. Accordingly, the pigment in the ink remains near the surface of the paper medium without penetrating thereinto. Almost all of the pigment in the ink contributes to color development, and therefore, it becomes possible to form an image having a sufficient density even if the amount of the pigment contained in the ink is decreased as compared with a conventional aqueous ink and the like.

Incidentally, the "paper medium" as used herein generally refers to a medium made of paper to be used for printing. The paper medium is broadly divided into coated paper coated with a material for increasing print properties such as art paper or coat paper and non-coated paper to be used for utilizing the properties of paper itself. The paper medium is applied to a variety of uses such as books, documents, newspapers, packages, printer sheets, etc. The paper medium also includes corrugated cardboard boxes, containers made of paper, and thick paper such as cardboard. For example, so-called plain paper such as copy paper to be used in a copier or a printer for office or home use is a typical paper medium.

The viscosity of the aqueous inkjet ink according to this embodiment is increased when the shearing force is decreased. Such a property was obtained by blending a water-soluble polymeric compound in the ink. Therefore, the aqueous inkjet ink according to this embodiment contains a water-soluble polymeric compound in addition to water and a pigment.

As water, for example, pure water or ultrapure water can be used. The amount of water in the aqueous inkjet ink is not particularly limited, however, when water is excessively contained, curling or the like is caused, and there is a possibility that the paper medium is deformed. If the amount of water is less than 70 wt% of the total amount of the ink, deformation of the paper medium can be avoided. The amount of water in the aqueous inkjet ink is more preferably less than 60 wt%, and most preferably less than 50 wt%.

In the aqueous inkjet ink, a viscosity adjusting agent is preferably contained in addition to water. By blending a viscosity adjusting agent in the ink, the storage stability of the ink can be increased and also the moisture retaining property and the defoaming property of the ink can be increased. Also, the ejection stability of the ink from the inkjet print head is further more increased.

Examples of the viscosity adjusting agent include polyethylene glycol, glycerin, and glycol ether. The amount of the viscosity adjusting agent in the aqueous inkjet ink according to this embodiment can be set to, for example, about 1 to 50 wt%. When the viscosity adjusting agent is contained in the ink in an amount within the above range, a desired effect can be obtained without causing any disadvantage.

As the pigment, for example, an azo pigment (such as an azo lake pigment, an insoluble azo pigment, a condensed azo pigment, or a chelate azo pigment), a polycyclic pigment (such as a phthalocyanine pigment, a perylene pigment, a perinone pigment, an anthraquinone pigment, a quinacridone pigment, a dioxazine pigment, a thioindigo pigment, an isoindolinone pigment, or a quinophthalone pigment), a dye chelate (such as a basic dye type chelate, or an acid dye type chelate), a nitro pigment, a nitroso pigment, aniline black, or the like can be used.

Specific examples of the carbon black which is used as the black ink include No. 2300, No. 900, MCF88, No. 33, No. 40, No. 45, No. 52, MA7, MA8, MA100, and No. 2200B (all of which are manufactured by Mitsubishi Chemical Corporation), Raven 5750, Raven 5250, Raven 5000, Raven 3500, Raven 1255, and Raven 700 (all of which are manufactured by Columbian Chemicals Company), Regal 400R, Regal 330R, Regal 660R, Mogul L, Monarch 700, Monarch 800, Monarch 880, Monarch 900, Monarch 1000, Monarch 1100, Monarch 1300, and Monarch 1400 (all of which are manufactured by Cabot Corporation), and Color Black FW1, Color Black FW2, Color Black FW2V, Color Black FW18, Color Black FW200, Color Black S150, Color Black S160, Color Black S170, Printex 35, Printex U, Printex V, Printex 140U, Special Black 6, Special Black 5, Special Black 4A, and Special Black 4 (all of which are manufactured by Degussa AG).

Specific examples of the pigment which is used in the yellow ink include C.I. Pigment Yellow 1, C.I. Pigment Yellow 2, C.I. Pigment Yellow 3, C.I. Pigment Yellow 12, C.I. Pigment Yellow 13, C.I. Pigment Yellow 14C, C.2. Pigment Yellow 16, C.2. Pigment Yellow 17, C.I. Pigment Yellow 73, C.I. Pigment Yellow 74, C.I. Pigment Yellow 75, C.I. Pigment Yellow 83, C.I. Pigment Yellow 93, C.I. Pigment Yellow 95, C.I. Pigment Yellow 97, C.I. Pigment Yellow 98, C.I. Pigment Yellow 109, C.I. Pigment Yellow 110, C.I. Pigment Yellow 114, C.I. Pigment Yellow 128, C.I. Pigment Yellow 129, C.I. Pigment Yellow 138, C.I. Pigment Yellow 150, C.I. Pigment Yellow 151, C.I. Pigment Yellow 154, C.I. Pigment Yellow 155, C.I. Pigment Yellow 180, and C.I. Pigment Yellow 185.

Specific examples of the pigment which is used in the magenta ink include C.I. Pigment Red 5, C.I. Pigment Red 7, C.I. Pigment Red 12, C.I. Pigment Red 48(Ca), C.I. Pigment Red 48 (Mn), C.I. Pigment Red 57(Ca), C.I. Pigment Red 57:1, C.I. Pigment Red 112, C.I. Pigment Red 122, C.I. Pigment Red 123, C.I. Pigment Red 168, C.I. Pigment Red 184, C.I. Pigment Red 202, and C.I. Pigment Violet 19.

Specific examples of the pigment which is used in the cyan ink include C.I. Pigment Blue 1, C.I. Pigment Blue 2, C.I. Pigment Blue 3, C.I. Pigment Blue 15:3, C.I. Pigment Blue 15:4, C.I. Pigment Blue 15:34, C.I. Pigment Blue 16, C.I. Pigment Blue 22, C.I. Pigment Blue 60, C.I. Vat Blue 4, and C.I. Vat Blue 60.

It is preferred that the pigment has an average particle diameter in the range of about 10 to 300 nm. If the average particle diameter is in the above range, when the pigment is used in an inkjet recording apparatus, clogging of the print head is not caused. It is more preferred that the pigment has an average particle diameter in the range of about 10 to 200 nm.

The average particle diameter of the pigment can be determined using a particle size distribution analyzer employing a dynamic light scattering method. Examples of the particle size distribution analyzer include HPPS (Malvern Instruments Ltd.).

The pigment can be used in a state of a pigment dispersion. The pigment dispersion can be prepared by, for example, dispersing the pigment in water, an alcohol, or the like using a dispersant. Examples of the dispersant include surfactants, water-soluble resins, and water-insoluble resins. Alternatively, the pigment may be used in the form of a self-dispersible pigment.

The self-dispersible pigment is a pigment, which can be dispersed in water or the like without using a dispersant, and to which at least one functional group selected from a carbonyl group, a carboxyl group, a hydroxyl group, and a sulfone group or a salt thereof is bound through a surface treatment. Examples of the surface treatment include a vacuum plasma treatment, a diazo coupling treatment, and an oxidation treatment. The self-dispersible pigment is obtained by grafting a functional group or a molecule containing a functional group on the surface of a pigment through a given surface treatment.

As compared with a pigment in other pigment dispersion, the self-dispersible pigment has excellent dispersion stability in water and also has a strong adsorption force to the paper medium. Therefore, the ink containing such a self-dispersible pigment can form a higher quality image.

In this embodiment, the amount of the pigment in the aqueous pigment ink is defined to be less than 5 wt%. If the amount is 5 wt% or more, the cost cannot be reduced and also clogging of the inside of the head or the like is likely to be caused. The amount of the pigment is more preferably less than 4 wt%, and most preferably less than 3 wt% of the aqueous pigment ink. The pigment is generally contained in the aqueous pigment ink in an amount of 1.5 wt% or more.

In the aqueous inkjet ink according to this embodiment, a water-soluble polymeric compound is contained. Examples of the water-soluble polymeric compound include polyoxyethylene alkyl ethers. The water-soluble polymeric compound may be any of a natural compound, a semi-synthetic compound, and a synthetic compound. Specific examples thereof include xanthan gum, guar gum, sodium chondroitin sulfate, hyaluronic acid, gum arabic, sodium alginate, carrageenan, mucopolysaccharide, collagen; elastin, keratin, methyl cellulose, hydroxyethyl cellulose, carboxymethyl cellulose, carboxyvinyl polymers, polyvinyl alcohols, polyvinyl alcohol derivatives, polyvinyl pyrrolidone, and sodium polyacrylate.

As the water-soluble polymeric compound, a polysaccharide is preferred because a desired effect can be obtained even in a small addition amount, and a natural polysaccharide having a weight average molecular weight of about several millions is more preferred. Specific examples thereof include xanthan gum, guar gum, and carrageenan.

The amount of the water-soluble polymeric compound in the aqueous inkjet ink is defined to be 0.02 wt% or more but less than 0.1 wt%. If the amount is less than 0.02 wt%, a desired effect cannot be obtained. On the other hand, if the amount is 0.1 wt% or more, it becomes difficult to stably eject the ink from the inkjet print head.

The amount of the water-soluble polymeric compound in the aqueous inkjet ink is preferably 0.05 wt% or less, and more preferably 0.025 wt% or less.

The aqueous inkjet ink according to this embodiment can be prepared by, for example, mixing a pigment dispersion and water and then adding a predetermined amount of a polysaccharide thereto.

In order to adjust the properties of the ink such as ejection performance and penetrability to optimum conditions, a surfactant may be blended in the ink.

Examples of the surfactant include polyoxyethylene alkyl ethers, polyoxyalkylene alkyl ethers, polyoxyethylene polycyclic phenyl ethers, polyoxyalkylene polycyclic phenyl ethers, glycerin fatty acid esters, and dimethylolheptane EO adducts.

Further, acetylene glycol-based surfactants or fluorosurfactants can also be used. Examples of the acetylene glycol-based surfactant include 2,4,7,9-tetramethyl-5-decyne-4,7-diol, 3,6-dimethyl-4-octyne-3,6-diol, and 3,5-dimethyl-1-hexyn-3-ol. Specific examples thereof include Surfynol 104, 82, 465, 485, and TG (all of which are manufactured by Air Products, Inc.).

Examples of the fluorosurfactant include perfluoroalkyl ethylene oxide adducts, perfluoroalkyl amine oxides, perfluoroalkyl carboxylates, and perfluoroalkyl sulfonates. Specific examples thereof include Megafac F-443, F-444, F-470, and F-494 (all of which are manufactured by Dainippon Ink Chemical Industries), Novel FC-430 and FC-4430 (all of which are manufactured by 3M Co., Ltd.), and Surfron S-141, S-145, S-111N, and S-113 (all of which are manufactured by Seimi Chemicals Co., Ltd.).

If such a surfactant is contained in the ink in an amount of about 1 part by weight based on 100 parts by weight of the ink, a desired effect can be exhibited without causing any disadvantage.

If desired, an additive such as a pH adjusting agent, an antiseptic or antifungal agent can be blended in the ink. Examples of the pH adjusting agent include potassium dihydrogen phosphate, disodium hydrogen phosphate, and sodium hydroxide.

As the antiseptic or antifungal agent, for example, sodium benzoate, sodium pentachlorophenol, sodium 2-pyridinethiol-1-oxide, sodium sorbate, sodium dehydroacetate, 1,2-dibenzisothiazolin-3-one (for example, Proxel CRL, Proxel BDN, Proxel GXL, Proxel XL-2, or Proxel TN, all of which are registered trademarks and manufactured by Imperial Chemical Industries Limited), or the like can be used.

By blending such an additive in the ink, the print image quality or storage stability is further improved.

Further, an additive suitable for the intended use for improving properties as the ink, for example, a penetrant or the like can be blended in the ink. The blending amount of such an additive may be appropriately selected within a range in which the additive is dissolved or dispersed in water. For example, a sparingly soluble additive can be used in combination with a solubilizing agent or the like. Any additive is desirably added within a range in which the dispersion stability of the above-mentioned pigment is not deteriorated.

Hereinafter, specific examples of the aqueous inkjet ink will be shown.

An aqueous inkjet ink was prepared by mixing the respective components according to a formulation shown in the following Table 1. The numerical values in the following Table 1 indicate the parts by mass of the respective components. As a surfactant, Surfynol 465 (manufactured by Nisshin Chemical Industry Co., Ltd.) was used.

The pigment dispersion is a self-dispersible pigment dispersion (CAB-O-JET-300, manufactured by Cabot Corporation). In this self-dispersible pigment dispersion, a pigment having a functional group on the surface is dispersed in water. The content of the pigment (solid content) in the pigment dispersion is 15 wt%. In the following Table 1, the amount of the pigment dispersion containing water and the pigment is shown.

Table 1

| No. | Pigment dispersion | Pure water | Viscosity adjusting agent | | Surfactant | Polysaccharide | | |
|---|---|---|---|---|---|---|---|---|
| | | | VC1 | VC2 | | PG1 | PG2 | PG3 |
| 1 | 20 | 31.5 | 24.25 | 24.25 | 1 | 0.025 | 0 | 0 |
| 2 | 20 | 31.5 | 24.25 | 24.25 | 1 | 0.05 | 0 | 0 |
| 3 | 20 | 31.5 | 24.25 | 24.25 | 1 | 0.1 | 0 | 0 |
| 4 | 33 | 18.5 | 24.25 | 24.25 | 1 | 0.025 | 0 | 0 |
| 5 | 28 | 24.5 | 24.25 | 24.25 | 1 | 0.025 | 0 | 0 |
| 6 | 20 | 31.5 | 24.25 | 24.25 | 1 | 0 | 0.025 | 0 |
| 7 | 20 | 31.5 | 24.25 | 24.25 | 1 | 0 | 0 | 0.025 |
| 8 | 20 | 31.5 | 24.25 | 24.25 | 1 | 0 | 0.075 | 0 |
| 9 | 20 | 31.5 | 24.25 | 24.25 | 1 | 0 | 0 | 0.075 |
| 10 | 20 | 31.5 | 24.25 | 24.25 | 1 | 0.11 | 0 | 0 |
| 11 | 20 | 31.5 | 24.25 | 24.25 | 1 | 0.019 | 0 | 0 |

(continued)

| No. | Pigment dispersion | Pure water | Viscosity adjusting agent | | Surfactant | Polysaccharide | | |
|---|---|---|---|---|---|---|---|---|
| | | | VC1 | VC2 | | PG1 | PG2 | PG3 |
| 12 | 20 | 31.5 | 24.25 | 24.25 | 1 | 0 | 0 | 0 |
| 13 | 40 | 11.5 | 24.25 | 24.25 | 1 | 0 | 0 | 0 |
| 14 | 34 | 17.5 | 24.25 | 24.25 | 1 | 0 | 0 | 0 |
| 15 | 33 | 18.5 | 24.25 | 24.25 | 1 | 0 | 0 | 0 |

The viscosity adjusting agents (VC1 and VC2) are the following compounds, respectively.

VC1: PEG 200 (manufactured by Sanyo Chemical Laboratory Co., Ltd.)
VC2: glycerin

Further, the polysaccharides (PG1, PG2, and PG3) are the following compounds, respectively.

PG1: xanthan gum
PG2: carrageenan
PG3: guar gum

Finally, the resulting mixture was filtered through a 1-$\mu$m membrane filter, whereby an aqueous inkjet ink was obtained. In the following Table 2, the amounts of the polysaccharides (wt%) in the aqueous inkjet inks are summarized.

Table 2

| No. | Polysaccharide (wt%) |
|---|---|
| 1 | 0.025 |
| 2 | 0.049 |
| 3 | 0.074 |
| 4 | 0.025 |
| 5 | 0.025 |
| 6 | 0.025 |
| 7 | 0.025 |
| 8 | 0.074 |
| 9 | 0.074 |
| 10 | 0.109 |
| 11 | 0.019 |
| 12 | 0 |
| 13 | 0 |
| 14 | 0 |
| 15 | 0 |

The content of the pigment in each aqueous inkjet ink is as shown in the following Table 3.

Table 3

| No. | Pigment (wt%) |
|---|---|
| 1 | 2.97 |

(continued)

| No. | Pigment (wt%) |
|-----|---------------|
| 2 | 2.97 |
| 3 | 2.97 |
| 4 | 4.90 |
| 5 | 4.16 |
| 6 | 2.97 |
| 7 | 2.97 |
| 8 | 2.97 |
| 9 | 2.97 |
| 10 | 2.97 |
| 11 | 2.97 |
| 12 | 2.97 |
| 13 | 5.94 |
| 14 | 5.05 |
| 15 | 4.90 |

The viscosity of each of the obtained aqueous pigment inks was measured using a cone-plate type viscometer. As the viscometer, VISCOMETER TV-22 (manufactured by TOKI SANGYO CO., LTD.) was used. The viscosity of each of the aqueous pigment inks at 25°C was measured at a given rotation speed using a cone rotor (0.8° x R24).

$V_A$ was obtained by performing the measurement at a rotation speed of 50 rpm and $V_B$ was obtained by performing the measurement at a rotation speed of 2.5 rpm.

Then, $V_B/V_A$ was calculated using the measurements ($V_A$ and $V_B$). The results are summarized in the following Table 4 along with the measurements.

Table 4

| No. | $V_A$ | $V_B$ | $V_B/V_A$ |
|-----|-------|-------|-----------|
| 1 | 9.36 | 16.7 | 1.784 |
| 2 | 10.5 | 22.5 | 2.143 |
| 3 | 12.1 | 48 | 3.967 |
| 4 | 12.5 | 25.6 | 2.048 |
| 5 | 10.5 | 19.2 | 1.829 |
| 6 | 9.56 | 15.8 | 1.653 |
| 7 | 9.84 | 16.8 | 1.707 |
| 8 | 13.2 | 68 | 5.152 |
| 9 | 12.1 | 58.00 | 4.793 |
| 10 | 17.5 | 105 | 6.000 |
| 11 | 8.84 | 12.5 | 1.414 |
| 12 | 7.05 | 7.1 | 1.007 |
| 13 | 8.5 | 8.51 | 1.001 |
| 14 | 8.3 | 8.35 | 1.006 |
| 15 | 8.1 | 8.13 | 1.004 |

For the obtained aqueous pigment inks, ejection stability and image density were examined. The evaluation methods are as follows, respectively.

<Ejection Stability>

Using an inkjet recording apparatus provided with a CF1 head (model number) manufactured by Toshiba Tec Corporation, continuous printing on plain paper was performed. This CF1 head has an ink circulation path. As the plain paper, Toshiba Copy Paper was used. Immediately after printing, the presence or absence of an image defect or a faint image was examined by visual observation, and the ejection stability was determined based on the following criteria. Incidentally, A and B are at a level of no practical problem.

A: A faint image or other problem did not occur.
B: A faint image occurred at a level of no practical problem.
C: Ejection failure occurred at a level of no practical use.

<Image Density>

A solid image was formed on plain paper using the above-mentioned inkjet recording apparatus, and the density of the image was measured. In order to form one pixel, from one nozzle, three drops of 4 pl (picoliter) of the ink were continuously ejected and allowed to land on the same place. The solid image with an area of 1 cm$^2$ was formed at 600 dpi (dots per inch). As the plain paper, Toshiba Copy Paper was used. The obtained printed matter was left as such for 1 day, and thereafter, the image density was measured using a spectrodensitometer (manufactured by X-Rite Co., Ltd.) The evaluation criteria of the image density are as'follows.
Good: The image density was 1.2 or more.
Bad: The image density was less than 1.2.
The obtained results are summarized in the following Table 5 along with the cost performance. The cost performance was evaluated based on the content of the pigment in the ink. When the content thereof was less than 5.0 wt%, the cost performance was evaluated as good, and when the content thereof was 5.0 wt% or more, the cost performance was evaluated as bad.

Table 5

| No. | Ejection stability | Image density | Cost performance |
|---|---|---|---|
| 1 | A | Good | Good |
| 2 | A | Good | Good |
| 3 | B | Good | Good |
| 4 | A | Good | Good |
| 5 | A | Good | Good |
| 6 | A | Good | Good |
| 7 | A | Good | Good |
| 8 | 8 | Good | Good |
| 9 | B | Good | Good |
| 10 | C | Good | Good |
| 11 | A | Bad | Good |
| 12 | A | Bad | Good |
| 13 | A | Good | Bad |
| 14 | A | Good | Bad |
| 15 | A | Bad | Good |

Further, each aqueous inkjet inks was stored in a thermostat chamber at 65°C, and the changing ratio of the viscosity after a lapse of one week was examined. The changing ratio of the viscosity of any of the inks was less than ±10%, and it was confirmed that all the inks have favorable storage stability.

As shown in the above Table 5, the No. 10 ink is inferior in terms of ejection stability. The $V_A$ of the No. 10 ink is as high as 17.5 mPa·s as shown in the above Table 4, and the No. 10 ink cannot be used as an inkjet ink. It is shown in the above Table 2 that the content of the polysaccharide in the No. 10 ink is too high.

The No. 11 ink is inferior in terms of image density. As shown in the above Table 4, the $V_B/V_A$ of the No. 11 ink is as low as 1.414. It is shown in the above Table 2 that the content of the polysaccharide in the No. 11 ink is too low.

The Nos. 12 to 15 inks cannot get a good grade on both evaluation items of image density and cost performance at the same time. As shown in the above Table 2, any of the Nos. 12 to 15 inks does not contain a polysaccharide. It is shown in the above Table 3 that the content of the pigment in the Nos. 13 and 14 inks exceeds 5.0 wt%.

The $V_B/V_A$ of each of the Nos. 1 to 9 aqueous inkjet inks is 1.5 or more. Since a predetermined amount of a natural polysaccharide is contained as the water-soluble polymeric compound therein, the requirement of the viscosity could be satisfied. Further, in the Nos. 1 to 9 inks, the content of the pigment is less than 5 wt%.

Since all the requirements are satisfied, aqueous inkjet inks having excellent ejection stability and also having high cost performance could be obtained. Moreover, these inks can form a high quality image on a paper medium.

The aqueous inkjet ink according to the embodiment of the invention can be obtained at a low cost, has excellent ejection stability, and can form an image having a sufficient density on a paper medium.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. An aqueous inkjet ink **characterized by** comprising:

   water;
   a pigment in an amount of less than 5 wt% of the aqueous inkjet ink; and
   a water-soluble polymeric compound in an amount of 0.02 wt% or more but less than 0.1 wt% of the aqueous inkjet ink,
   the aqueous inkjet ink having a viscosity Va measured at 25 °C at a rotation speed of 50 rpm using a cone-plate type viscometer and ranging from 3 to 15 mPa·s.

2. The ink according to claim1 , **characterized in that** the water-soluble polymeric compound is a natural polysaccharide.

3. The ink according to claim 1 , **characterized in that** the natural polysaccharide is selected from the group consisting of xanthan gum, guar gum, and carrageenan.

4. The ink according to any one of claims 1 to 3, **characterized in that** the water-soluble polymeric compound is comprised in an amount of 0.05 wt% or less of the aqueous inkjet ink.

5. The ink according to any one of the preceding claims, **characterized in that** inkjet ink has viscosities (mPa·s) measured at 25°C using a cone-plate type viscometer and satisfying the following relationships:

$$V_B/V_A \geq 1.5$$

$$3\text{mPa·s} \leq V_A \leq 15 \text{ mPa·s}$$

   wherein $V_A$ represents a viscosity measured at a rotation speed of 50 rpm and $V_B$ represents a viscosity measured at a rotation speed of 2.5 rpm.

6. The ink according to claim 5, **characterized in that** the $V_B$ is 20 mPa·s or more.

**7.** The ink according to claim 5 or 6, **characterized in that** the $V_B/V_A$ is 1.7 or more.

**8.** The ink according to any one of the preceding claims, **characterized in that** the pigment is a self-dispersible pigment.

**9.** The ink according to any one of the preceding claims, **characterized in that** the pigment is comprised in an amount of less than 3 wt% of the aqueous inkjet ink.

**10.** The ink according to any one of the preceding claims, **characterized in that** the pigment is comprised in an amount of 1.5 wt% or more of the aqueous inkjet ink.

**11.** The ink according to any one of the preceding claims, **characterized by** further comprising a viscosity adjusting agent.

**12.** The ink according to claim 11, **characterized in that** the viscosity adjusting agent is selected from the group consisting of glycerin, polyethylene glycol, and glycol ether.

**13.** The ink according to any one of the preceding claims, **characterized in that** the aqueous inkjet ink is used in a recording apparatus provided with an inkjet print head having an ink circulation path.

**14.** A method for inkjet printing, **characterized by** comprising:

forming an image by ejecting at least one ink composition from an inkjet print head having an ink circulation path; wherein
the ink composition is the aqueous inkjet ink according to any one of claims 1 to 13.

**Patentansprüche**

**1.** Wässrige Tintenstrahltinte, **dadurch gekennzeichnet, dass** sie umfasst:

Wasser;
ein Pigment in einer Menge von weniger als 5 Gew.% der wässrigen Tintenstrahltinte; und
eine wasserlösliche Polymerverbindung in einer Menge von 0,02 Gew.% oder mehr, aber weniger als 0,1 Gew.% der wässrigen Tintenstrahltinte,
wobei die wässrige Tintenstrahltinte eine Viskosität $V_A$ im Bereich von 3 bis 15 mPa·s hat, gemessen bei 25°C und einer Rotationsgeschwindigkeit von 50 U/min unter Verwendung eines Kegel-Platten-Viskosimeters.

**2.** Tinte nach Anspruch 1, **dadurch gekennzeichnet, dass** die wasserlösliche Polymerverbindung ein natürliches Polysaccharid ist.

**3.** Tinte nach Anspruch 1, **dadurch gekennzeichnet, dass** das natürliche Polysaccharid aus einer Gruppe bestehend aus Xanthangummi, Guargummi und Carrageen ausgewählt ist.

**4.** Tintenstrahltinte nach einem der voranstehenden Ansprüche 1 bis 3, **dadurch gekennzeichnet, dass** die wasserlösliche Polymerverbindung in einer Menge von 0,05 Gew.% oder weniger der wässrigen Tintenstrahltinte enthalten ist.

**5.** Tinte nach einem dem voranstehenden Ansprüche, **dadurch gekennzeichnet, dass** die Tintenstrahltinte eine bei 25°C unter Verwendung eines Kegel-Platten-Viskosimeters gemessenen Viskosität (mPa·s) hat, welche die folgenden Beziehungen erfüllt:

$$V_B/V_A \geq 1{,}5$$

$$3\ \text{mPa·s} \leq V_A \leq 15\ \text{mPa·s}$$

wobei $V_A$ eine bei einer Rotationsgeschwindigkeit von 50 U/min gemessene Viskosität repräsentiert und $V_B$ eine bei einer Rotationsgeschwindigkeit von 2,5 U/min gemessene Viskosität repräsentiert.

6. Tinte nach Anspruch 5, **dadurch gekennzeichnet, dass** $V_B$ 20 mPa.s oder mehr ist.

7. Tinte nach Anspruch 5 oder 6, **dadurch gekennzeichnet, dass** $V_B/V_A$ 1,7 oder mehr ist.

8. Tinte nach einem der voranstehenden Ansprüche, **dadurch gekennzeichnet, dass** das Pigment ein selbstdispergierendes Pigment ist.

9. Tinte nach einem der voranstehenden Ansprüche, **dadurch gekennzeichnet, dass** das Pigment in einer Menge von weniger als 3 Gew.% der wässrigen Tintenstrahltinte enthalten ist.

10. Tinte nach einem der voranstehenden Ansprüche, **dadurch gekennzeichnet, dass** das Pigment in einer Menge von 1,5 Gew.% der wässrigen Tintenstrahltinte oder mehr enthalten ist.

11. Tinte nach einem der voranstehenden Ansprüche, **dadurch gekennzeichnet, dass** zusätzlich ein viskositätsanpassendes Agens enthalten ist.

12. Tinte nach Anspruch 11, **dadurch gekennzeichnet, dass** das viskositätsanpassende Agens aus einer Gruppe bestehend aus Glycerin, Polyethylenglycol und Glycolether ausgewählt ist.

13. Tinte nach einem der voranstehenden Ansprüche, **dadurch gekennzeichnet, dass** die wässrige Tintenstrahltinte in einem mit einem Tintenstrahldruckkopf mit einem Tintenzirkulationspfad ausgestattenden Aufzeichnungsapparat verwendet wird.

14. Verfahren zum Tintenstrahldrucken, **dadurch gekennzeichnet, dass** es umfasst:

Bilden einer Darstellung durch Ausgeben mindestens einer Tintenzusammensetzung aus einem Tintenstrahldruckkopf mit einem Tintenzirkulationspfad; wobei
die Tintenzusammensetzung die wässrige Tintenstrahltinte nach einem der voranstehenden Ansprüche 1 bis 13 ist.

**Revendications**

1. Encre aqueuse pour jet d'encre **caractérisée par le fait qu'**elle comprend :

de l'eau ;
un pigment en une quantité inférieure à 5 % en poids de l'encre aqueuse pour jet d'encre ; et
un composé polymère soluble dans l'eau en une quantité supérieure ou égale à 0,02 % en poids mais inférieure à 0,1 % en poids de l'encre aqueuse pour jet d'encre,
l'encre aqueuse pour jet d'encre présentant une viscosité Va mesurée à 25°C, à une vitesse de rotation de 50 t/mn en utilisant un viscosimètre du type cône/plaque et s'étendant dans la plage de 3 à 15 mPa.s.

2. Encre selon la revendication 1, **caractérisée en ce que** le composé polymère soluble dans l'eau est un polysaccharide naturel.

3. Encre selon la revendication 1, **caractérisée en ce que** le polysaccharide naturel est sélectionné à partir du groupe constitué par la gomme de xanthane, la gomme de guar, et le carraghénane.

4. Encre selon l'une quelconque des revendications 1 à 3, **caractérisée en ce que** le composé polymère soluble dans l'eau est présent en une quantité inférieure ou égale à 0,05 % en poids de l'encre aqueuse pour jet d'encre.

5. Encre selon l'une quelconque des revendications précédentes, **caractérisée en ce que** l'encre pour jet d'encre présente des viscosités (mPa.s) mesurées à 25°C en utilisant un viscosimètre du type cône/plaque et satisfaisant les relations suivantes :

$$V_B / V_A \geq 1{,}5$$

$$3 \text{ mPa.s} \leq V_A \leq 15 \text{ mPa.s}$$

dans laquelle VA représente une viscosité mesurée à une vitesse de rotation de 50 t/mn et $V_B$ représente une viscosité mesurée à une vitesse de rotation de 2,5 t/mn.

6. Encre selon la revendication 5, **caractérisée en ce que** la viscosité $V_B$ est supérieure ou égale à 20 mPa.s.

7. Encre selon la revendication 5 ou 6, **caractérisée en ce que** $V_B$/VA est supérieur ou égal à 1,7.

8. Encre selon l'une quelconque des revendications précédentes, **caractérisée en ce que** le pigment est un pigment auto-dispersant.

9. Encre selon l'une quelconque des revendications précédentes, **caractérisée en ce que** le pigment est présent en une quantité inférieure à 3 % en poids de l'encre aqueuse pour jet d'encre.

10. Encre selon l'une quelconque des revendications précédentes, **caractérisée en ce que** le pigment est présent en une quantité supérieure ou égale à 1,5 % en poids de l'encre aqueuse pour jet d'encre.

11. Encre selon l'une quelconque des revendications précédentes, **caractérisée en ce qu'**elle comprend, en outre, un agent d'ajustement de viscosité.

12. Encre selon la revendication 11, **caractérisée en ce que** l'agent d'ajustement de viscosité est sélectionné à partir du groupe constitué par la glycérine, le glycol de polyéthylène , et l'éther de glycol.

13. Encre selon l'une quelconque des revendications précédentes, **caractérisée en ce que** l'encre aqueuse pour jet d'encre est utilisée dans un dispositif d'enregistrement comprenant une tête d'impression à jet d'encre comportant un trajet de circulation d'encre.

14. Procédé d'impression à jet d'encre, **caractérisé en ce qu'**il comprend :

la formation d'une image par éjection d'au moins une composition d'encre à partir d'une tête d'impression à jet d'encre comportant un trajet de circulation d'encre ; dans lequel
la composition de l'encre est celle de l'encre aqueuse pour jet d'encre selon l'une quelconque des revendications 1 à 13.

FIG. 1

FIG. 2